# EUROPÄISCHE PATENTSCHRIFT

(11) **EP 1 311 916 B1**
(45) Veröffentlichungstag und Bekanntmachung des Hinweises auf die Patenterteilung: **11.05.2005**
(21) Anmeldenummer: 01964888.0
(22) Anmeldetag: 09.08.2001
(51) Int. Cl.: G05B 19/418

(54) **SYSTEM UND VERFAHREN ZUR KONTEXTBEZOGENEN PROTOKOLLIERUNG INSBESONDERE IM UMFELD PRODUKTION, MONTAGE, SERVICE ODER WARTUNG**
CONTEXT-DEPENDENT PROTOCOL CREATION SYSTEM AND METHOD, ESPECIALLY FOR USE IN THE FIELD OF PRODUCTION, ASSEMBLY, SERVICE OR MAINTENANCE
SYSTEME ET PROCEDE POUR L'ETABLISSEMENT DE RAPPORTS LIE AU CONTEXTE, EN PARTICULIER DANS LE DOMAINE DE LA PRODUCTION, DU MONTAGE, DU SERVICE OU DE LA MAINTENANCE

(30) Priorität: 22.08.2000 DE 10041105; 03.04.2001 DE 10116540
(43) Veröffentlichungstag der Anmeldung: 21.05.2003
(73) Patentinhaber: SIEMENS AKTIENGESELLSCHAFT, 80333 München (DE)
(72) Erfinder: MORITZ, Soeren, 91353 Wimmelbach (DE)
(86) Internationale Anmeldenummer: PCT/DE2001/003049
(87) Internationale Veröffentlichungsnummer: WO 2002/017026

(56) Entgegenhaltungen:
- EP-A- 0 428 135
- US-A- 5 588 109
- US-A- 6 031 545
- US-A- 6 037 882
- US-A- 6 094 625
- DAUDE R ET AL: "HEAD-MOUNTED DISPLAY ALS FACHARBEITERORIENTIERTE UNTERSTUETZUNGSKOMPONENTE AN CNC-WERKZEUGMASCHINEN" WERKSTATTSTECHNIK, SPRINGER VERLAG. BERLIN, DE, Bd. 86, Nr. 5, 1. Mai 1996 (1996-05-01), Seiten 248-252, XP000585192 ISSN: 0340-4544
- KUZUOKA H: "SPATIAL WORKSPACE COLLABORATION: A SHAREVIEW VIDEO SUPPORT SYSTEM FOR REMOTE COLLABORATION CAPABILITY" STRIKING A BALANCE. MONTEREY, MAY 3 - 7, 1992, PROCEEDINGS OF THE CONFERENCE ON HUMAN FACTORS IN COMPUTING SYSTEMS, READING, ADDISON WESLEY, US, 3. Mai 1992 (1992-05-03), Seiten 533-540, XP000426833

## Beschreibung

Die Erfindung betrifft ein System und ein Verfahren zur kontextbezogenen Protokollierung insbesondere im Umfeld Produktion, Montage, Service oder Wartung.

Ein derartiges System und Verfahren kommt beispielsweise im Bereich der Automatisierungstechnik, bei Produktions- und Werkzeugmaschinen, bei Diagnose-/Serviceunterstützungssystemen sowie für komplexe Komponenten, Geräte und Systeme, wie beispielsweise Fahrzeuge und industrielle Maschinen und Anlagen zum Einsatz. Eine besonders vorteilhafte Anwendung besteht im Zusammenhang mit Augmented Reality (= AR = "erweiterte Realität"), einer neuen Form der Mensch-Technik-Interaktion, bei der dem Anwender Informationen in sein Sichtfeld eingeblendet werden - beispielweise über eine Datenbrille. Die Einblendung geschieht jedoch kontextabhängig, d. h. passend und abgeleitet vom betrachteten Objekt, z. B. einem Bauteil. So wird das reale Sichtfeld beispielweise eines Monteurs durch eingeblendete Montagehinweise um für ihn wichtige Informationen erweitert. In diesem Falle kann Augmented Reality unter anderem das herkömmliche Montagehandbuch ersetzen.

Der hier vorgestellte Lösungsansatz bezieht sich auf den Einsatz von Augmented Reality (AR) in der Montage sowie im Bereich Service und Wartung.

Der Erfindung liegt die Aufgabe zugrunde, ein System sowie ein Verfahren anzugeben, welches die Protokollierung sowie Möglichkeiten der späteren Auswertung von Arbeitsergebnissen, erkannten Mängeln und sonstigen Informationen ermöglicht.

Diese Aufgabe wird gelöst durch ein System zur kontextbezogenen Protokollierung, mit
- einem Protokollaufzeichnungssystem zur Aufzeichnung von Protokollen, wobei die Protokolle elektronische Daten enthalten,
- Attributen, welche Informationen zu mindestens einem Anwender enthalten,
- Attribut-Wert-Paar-Listen zur Zuordnung von Attributwerten zu den Attributen in Listenform,
- einem Protokollierungssystem zur Verknüpfung der aufgezeichneten Protokolle mit den Attribut-Wert-Paar-Listen,
- einem ersten Speichersystem zur Speicherung der aufgezeichneten Protokolle und zur Ablage und Auswertung der Attribute und
- einem zweiten Speichersystem zur Speicherung der Informationen über den Anwender, insbesondere zur Speicherung von Name, Kennung und Aufgabe.

Diese Aufgabe wird gelöst durch ein Verfahren zur kontextbezogenen Protokollierung, bei welchem
- ein Protokollaufzeichnungssystem Protokolle, die elektronische Daten enthalten, aufzeichnet,
- Attribute Informationen zu mindestens einem Anwender enthalten,
- Attribut-Wert-Paar-Listen in Listenform Attributwerte den Attributen zuordnen,
- ein Protokollierungssystem die aufgezeichneten Protokolle mit den Attribut-Wert-Paar-Listen verknüpft,
- ein erstes Speichersystem die aufgezeichneten Protokolle speichert und die Attribute ablegt und auswertet und
- ein zweites Speichersystem die Informationen über den Anwender, insbesondere Name, Kennung und Aufgabe, speichert.

Um eine spätere Zuordnung der aufgezeichneten Protokolle zu der Arbeitssituation und dem Einsatzort des Anwenders während der Aufzeichnung des jeweiligen Protokolls zu vereinfachen, wird vorgeschlagen, dass die Attribute Informationen zu einem Einsatzort und einer Arbeitssituation enthalten und dass das System mindestens ein Ortverfolgungssystem mit mindestens einem Sensor zur automatischen Ermittlung des Einsatzortes und einer aktuell bearbeiteten Komponente enthält. Um weitere Informationen zur aktuellen Arbeitssituation zu erhalten, erweist sich der Einsatz einer Workflow Engine zur automatischen Abarbeitung eines aktuellen in elektronischer Form vorliegenden Arbeitsplans und eines aktuellen Arbeitsschritts des Arbeitsplans als vorteilhaft. Zur Verwaltung und Verknüpfung der vom zweiten Speichersystem, vom Ortverfolgungssystem und von der Workflow Engine gelieferten Informationen ist ein zentrales drittes Speichersystem vorgesehen. Für eine spätere Auswertung der im ersten Speichersystem gespeicherten Protokolle über die Attribute werden vorteilhafterweise Abfrageroutinen mit Hilfe von SQL-Statements vorgesehen, wobei das erste Speichersystem in diesem Fall als ein relationales Speichersystem ausgebildet ist.

Im Folgenden wird die Erfindung anhand des in der Figur dargestellten Ausführungsbeispiels näher beschrieben und erläutert.

Es zeigt:

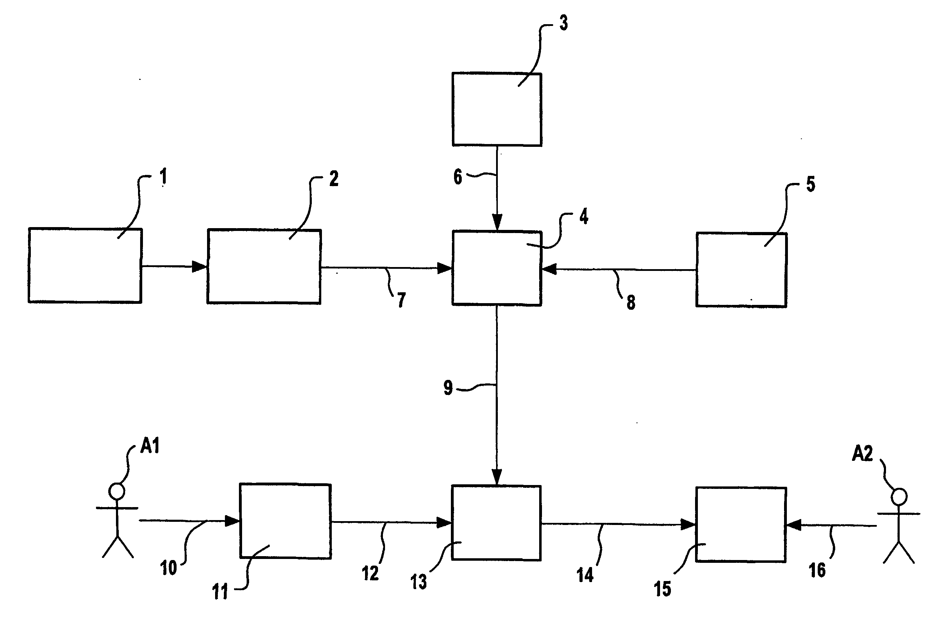

- FIG 1: ein Ausführungsbeispiel für ein System zur automatischen Datenaufbereitung.

Eine in verschiedenen Ausprägungen wiederkehrende Anforderung, insbesondere im Umfeld von Wartung und Service, ist die Protokollierung von Arbeitsergebnissen, erkannten Mängeln und sonstigen Informationen, die für eine spätere Auswertung von Bedeutung sind. Die Art der Protokollierung hängt von der Art der Tätigkeit und den verwendeten Medien ab. Dies kann z. B. das Erstellen eines Screen-Shots sein, der angereichert durch Text, Grafik und Sprache als Protokoll abzulegen ist. Die erstellten Protokolle dienen einer späteren Auswertung. Eine gezielte Auswertung, z. B. das Ausfiltern aller Protokolle zu einer bestimmten Anlagenkomponente (z. B. zu Ventil X3d), ist nur dann möglich, wenn die Protokolle mit entsprechenden Attributen und Attributwerten versehen werden können. Insbesondere bei der elektronischen Auswertung ist dies unabdingbar. Heute werden die für eine Auswertung notwendigen Attribute gar nicht oder nur händisch erfasst bzw. liegen nicht in elektronischer Form für die informationstechnische Bearbeitung vor.

Im Folgenden werden die Teile des Systems zur automatischen Datenaufbereitung näher erläutert:

Anwenderprofil 3: Speichersystem das Informationen über die Anwender A1, A2 (Name, Kennung, Aufgabe -> Workflow) enthält und diese Informationen 6 an das Kontextobjekt 4 weitergeben kann.

Ortverfolgungssystem 2: Ein System das mit Hilfe eines oder mehrerer Sensoren 1 (z. B. mittels Erfassung von Barcode oder Infrarot-Baken) die Position des Anwenders A1, A2 bzw. eines vom Anwender A1, A2 mitgeführten Rechnersystems bzw. einer Komponente im Raum ermitteln kann und die Information 7 über die Position an das Kontextobjekt liefern kann. Je nach eingesetztem System kann diese Position in eine grobe Ortsbestimmung (z. B. der Raum) und/oder in eine feine Ortsbestimmung (z. B. eine am Einsatzort befindliche Komponente) umgesetzt werden. Gegebenenfalls sind mehrere Ortverfolgungssysteme 2 einzusetzen, um das gewünschte Ergebnis zu ermitteln. Ortverfolgungssysteme 2 werden auch als Tracking-Systeme bezeichnet.

Ortverfolgungssensor 1: Sensor der zur Ermittlung einer Position im Raum eingesetzt wird.

Workflow Engine 5: Ein System, welches einen in elektronischer Form vorliegenden Arbeitsplan abarbeiten kann. Ein Arbeitsplan (Workflow) setzt sich dabei aus ein oder mehreren miteinander verbundenen Arbeitsschritten (Step) zusammen. Die Workflow Engine kann Informationen 8 über den Arbeitsplan, den aktuellen Arbeitsschritt und somit über die konkrete Arbeitssituation an das Kontextobjekt 4 übergeben.

Kontextobjekt 4: Ist ein zentrales Speichersystem für die vom Anwenderprofil 3, Ortverfolgungssystem 2 und Workflow Engine 5 gelieferten Informationen 6, 7, 8.
Attribut-Wert-Paar-Liste 9: Information die vom Kontextobjekt 4 an das Protokollierungssystem 13 in Form einer Liste von Attributname und Attributwert geliefert wird.

Protokollierungssystem 13: Das Protokollierungssystem 13 setzt die von einem Protokollaufzeichnungssystem 11 eingehenden Informationen 12 in Verbindung mit den aktuellen Attributwerten 9 des Kontextobjekts 4 und speichert die Ergebnisse 14 im Speichersystem 15.

Protokollaufzeichnungssystem 11: System für die Aufzeichnung von Protokollen, welche z. B. Spracheingaben 10 eines Anwenders A1 enthalten. Das Protokoll wird in Form von elektronischen Daten geliefert (z. B. als File im SMIL-Format). Die Daten können unterschiedliche Strukturen und Medienformate (Text, Sprache, Video, Grafik, etc.) aufweisen.

Speichersystem 15: Ein Speichersystem mit der Eigenschaft, Daten inkl. Attributwerte abzulegen, die eine spätere Auswertung (Query) ermöglichen. So ein Speichersystem 15 könnte z. B. ein relationales Datenbanksystem sein. Entsprechend würde die Query in Form eines SQL-Statements formuliert werden, welche die Anfrage 16 eines Anwenders A2 umsetzt.

Durch ein Kontextobjekt 4 werden zentral die wichtigsten Attribute zum aktuellen Bearbeitungskontext verwaltet (Bearbeiter, Datum, Einsatzort, Arbeitsplan, Arbeitsschritt, etc.). Diese Kontextinformationen in Form einer Attribut-Wert-Paar-Liste 9 werden automatisch an jedes aufgezeichnete Protokoll gehängt. Somit werden alle Protokolle im nachhinein auswertbar (z. B. "Gib mir alle Protokolle zum Arbeitsschritt Spindeleinbau der letzten drei Monate"). Diese Abfrage würde in einem relationalen Speichersystem 15 z. B. in Form eines SQL-Statements erfolgen. Die Ablage eines Protokolls kann in jedem beliebigen Speichersystem 15 erfolgen, welches die Ablage und Auswertung von Attributen und somit von attributierten Daten zulässt. Mit Hilfe von Ortverfolgungssystemen 2 wird der Einsatzort (z. B. "Raum D") und die aktuell bearbeitete Komponente (z. B. "Ventil x3D") automatisch ermittelt und in das Kontextobjekt 4 eingetragen. Der automatische Eintrag 8 vom aktuellen Arbeitsplan (Workflow) und Arbeitsschritt (Step) erfolgt über die Workflow Engine 5.

Der erfinderische Schritt liegt zum einen in der automatischen Erfassung von Attributen (Anwenderidentität, Anwenderrolle, Einsatzort, Arbeitsplan, Arbeitsschritt) über das Anwenderprofil 3, die Workflow Engine 5 und die Ortverfolgungssysteme 2, zum anderen in der automatischen Verknüpfung von Attributen und Protokollen sowie deren Ablage in ein geeignetes Speichersystem 15. Dieses besitzt die Eigenschaft, dass eine spätere Auswertung der Protokolle über die Attribute möglich wird (z. B. Queries mit Hilfe von SQL-Statements).

Zusammenfassend betrifft die Erfindung somit ein System und Verfahren zur kontextbezogenen Protokollierung insbesondere im Umfeld Produktion, Montage, Service oder Wartung. Dabei erfolgt eine automatische Erfassung von Attributen (User-ID, User-Rolle, Einsatzort, Arbeitsplan, Arbeitsschritt) über ein Anwenderprofil 3, eine Workflow Engine 8 und Ortverfolgungssysteme 2, eine automatische Verknüpfung der Attribute mit Protokollen sowie deren Ablage in ein geeignetes Speichersystem 15, welches eine spätere Auswertung der Protokolle über die Attribute ermöglicht.

## Patentansprüche

1. System zur kontextbezogenen Protokollierung, mit
- einem Protokollaufzeichnungssystem (11) zur Aufzeichnung von Protokollen, wobei die Protokolle elektronische Daten enthalten,
- Attributen, welche Informationen zu mindestens einem Anwender (A1, A2) enthalten,
- Attribut-Wert-Paar-Listen (9) zur Zuordnung von Attributwerten zu den Attributen in Listenform,
- einem Protokollierungssystem (13) zur Verknüpfung der aufgezeichneten Protokolle mit den Attribut-Wert-Paar-Listen (9),
- einem ersten Speichersystem (15) zur Speicherung der aufgezeichneten Protokolle und zur Ablage und Auswertung der Attribute und
- einem zweiten Speichersystem (3) zur Speicherung der Informationen über den Anwender (A1, A2), insbesondere zur Speicherung von Name, Kennung und Aufgabe.

2. System nach Anspruch 1,
**dadurch gekennzeichnet,**
**dass** die Attribute Informationen zu einem Einsatzort und einer Arbeitssituation enthalten und dass das System mindestens ein Ortverfolgungssystem (2) mit mindestens einem Sensor (1) zur automatischen Ermittlung des Einsatzortes und einer aktuell bearbeiteten Komponente enthält.

3. System nach Anspruch 1 oder 2,
**dadurch gekennzeichnet,**
**dass** eine Workflow Engine (5) zur automatischen Abarbeitung eines aktuellen in elektronischer Form vorliegenden Arbeitsplans und eines aktuellen Arbeitsschritts des Arbeitsplans vorgesehen ist.

4. System nach einem der vorhergehenden Ansprüche,
**dadurch gekennzeichnet,**
**dass** ein zentrales drittes Speichersystem (4) zur Verwaltung und Verknüpfung von vom zweiten Speichersystem (3), vom Ortverfolgungssystem (2) und von der Workflow Engine (5) gelieferten Informationen (6, 7, 8) vorgesehen ist.

5. System nach einem der vorhergehenden Ansprüche,
**dadurch gekennzeichnet,**
**dass** Abfrageroutinen zur von den Attributen abhängigen Auswertung der im ersten Speichersystem (15) gespeicherten Protokolle mit Hilfe von SQL-Statements vorgesehen sind, wobei das erste Speichersystem (15) als ein relationales Speichersystem ausgebildet ist.

6. Verfahren zur kontextbezogenen Protokollierung, bei welchem
- ein Protokollaufzeichnungssystem (11) Protokolle, die elektronische Daten enthalten, aufzeichnet,
- Attribute Informationen zu mindestens einem Anwender (A1, A2) enthalten,
- Attribut-Wert-Paar-Listen (9) in Listenform Attributwerte den Attributen zuordnen,
- ein Protokollierungssystem (13) die aufgezeichneten Protokolle mit den Attribut-Wert-Paar-Listen (9) verknüpft,
- ein erstes Speichersystem (15) die aufgezeichneten Protokolle speichert und die Attribute ablegt und auswertet und
- ein zweites Speichersystem (3) die Informationen über den Anwender(A1, A2), insbesondere Name, Kennung und Aufgabe, speichert.

7. Verfahren nach Anspruch 6,
**dadurch gekennzeichnet,**
**dass** die Attribute Informationen zu einem Einsatzort und einer Arbeitssituation enthalten und dass mindestens ein Ortverfolgungssystem (2) mit mindestens einem Sensor (1) den Einsatzort und eine aktuell bearbeitete Komponente automatisch ermittelt.

8. Verfahren nach Anspruch 6 oder 7,
**dadurch gekennzeichnet,**
**dass** eine Workflow Engine (5) einen aktuellen in elektronischer Form vorliegenden Arbeitsplan und einen aktuellen Arbeitsschritt des Arbeitsplans automatisch abarbeitet.

9. Verfahren nach einem der Ansprüche 6 bis 8,
**dadurch gekennzeichnet,**
**dass** ein zentrales drittes Speichersystem (4) vom zweiten Speichersystem (3), vom Ortverfolgungssystem (2) und von der Workflow Engine (5) gelieferte Informationen (6, 7, 8) verwaltet und verknüpft.

10. Verfahren nach einem der Ansprüche 6 bis 9,
**dadurch gekennzeichnet,**
**dass** die im ersten Speichersystem (15) gespeicherten Protokolle mit Abfrageroutinen abhängig von den Attributen mit Hilfe von SQL-Statements ausgewertet werden, wobei das erste Speichersystem (15) als ein relationales Speichersystem ausgebildet ist.

## Claims

1. A system for context-dependent reporting, having
- a report-recording system (11) for recording reports, the reports containing electronic data,
- attributes containing information on at least one user (A1, A2),
- attribute-value-pair lists (9) for assigning attribute values to the attributes in list form
- a reporting system (13) for linking the recorded reports to the attribute-value-pair lists (9),
- a first memory system (15) for storing the recorded reports and for storing and analyzing the attributes, and
- a second memory system (3) for storing the information on the user (A1, A2), in particular for storing name, identification and function.

2. The system according to Claim 1,
**characterised in that**
the attributes contain information on a location and a work situation, and the system contains at least one tracking system (2) having at least one sensor (1) for automatic determination of the location and of a component currently being worked on.

3. The system according to Claim 1 or 2,
**characterised in that**
a workflow engine (5) is provided for automatic processing of a current workflow plan present in electronic form, and a current work step of the workflow plan.

4. The system according to one of the preceding Claims,
**characterised in that**
a central third memory system (4) is provided for managing and linking information (6, 7, 8) supplied from the second memory system (3), from the tracking system (2) and from the workflow engine (5).

5. The system according to one of the preceding Claims,
**characterised in that**
query routines are provided using SQL statements for the analysis, dependent on the attributes, of the reports stored in the first memory system (15), the first memory system (15) being designed as a relational memory system.

6. A method for context-dependent reporting, in which
- a report-recording system (11) records reports containing electronic data,
- attributes contain information on at least one user (A1, A2),
- attribute-value-pair lists (9) assign attribute values to the attributes in list form,
- a reporting system (13) links the recorded reports to the attribute-value-pair lists (9),
- a first memory system (15) stores the recorded reports and stores and analyzes the attributes, and
- a second memory system (3) stores the information on the user (A1, A2), in particular name, identification and function.

7. The method according to Claim 6,
**characterised in that**
the attributes contain information on a location and a work situation, and at least one tracking system (2) having at least one sensor (2) determines automatically the location and a component currently being worked on.

8. The method according to Claim 6 or 7,
**characterised in that**
a workflow engine (5) processes automatically a current workflow plan present in electronic form, and a current work step of the workflow plan.

9. The method according to one of the Claims 6 to 8,
**characterised in that**
a central third memory system (4) manages and links information (6, 7, 8) supplied from the second memory system (3), from the tracking system (2) and from the workflow engine (5).

10. The method according to one of the Claims 6 to 9,
**characterised in that**
the reports stored in the first memory system (15) are analyzed using query routines dependent on the attributes using SQL statements, the first memory system (15) being designed as a relational memory system.

## Revendications

1. Système pour l'établissement de rapports liés au contexte, comportant
- un système d'enregistrement de rapports (11) pour l'enregistrement de rapports, les rapports contenant des données électroniques,
- des attributs, qui contiennent des informations pour au moins un utilisateur (A1, A2),
- des listes de couples attribut-valeur (9) pour l'association de valeurs d'attribut aux attributs sous forme de listes,
- un système d'établissement de rapports (13) pour la combinaison des rapports enregistrés avec les listes de couples attribut-valeur (9),
- un premier système de mémorisation (15) pour la mémorisation des rapports enregistrés et pour la mémorisation et l'évaluation des attributs, et
- un deuxième système de mémorisation (3) pour la mémorisation des informations sur l'utilisateur (A1, A2), notamment pour la mémorisation de son nom, de son identificateur et de son rôle.

2. Système selon la revendication 1,
**caractérisé par le fait que** les attributs contiennent des informations sur un lieu d'intervention et sur une situation de travail et que le système contient au moins un système de localisation et de poursuite (2) avec au moins un capteur (1) pour la détermination automatique du lieu d'intervention et d'un élément actuellement traité.

3. Système selon la revendication 1 ou 2,
**caractérisé par le fait qu'**un système dit Workflow Engine (5) est prévu pour l'exécution automatique d'un programme de travail actuel présent sous forme électronique et d'une étape de travail actuelle du programme de travail.

4. Système selon l'une des revendications précédentes,
**caractérisé par le fait qu'**un troisième système de mémorisation central (4) est prévu pour la gestion et la combinaison d'informations (6, 7, 8) fournies par le deuxième système de mémorisation (3), par le système de localisation et de poursuite (2) et par le Workflow Engine (5).

5. Système selon l'une des revendications précédentes,
**caractérisé par le fait que** des routines d'interrogation sont prévues pour l'évaluation, en fonction des attributs et à l'aide de propositions SQL, des rapports mémorisés dans le premier système de mémorisation (15), le premier système de mémorisation (15) étant conçu comme un système de mémorisation relationnel.

6. Procédé pour l'établissement de rapports liés au contexte, dans lequel
- un système d'enregistrement de rapports (11) enregistre des rapports qui contiennent des données électroniques,
- des attributs contiennent des informations pour au moins un utilisateur (A1, A2),
- des listes de couples attribut-valeur (9) sous forme de listes associent des valeurs d'attribut aux attributs,
- un système d'établissement de rapports (13) combine les rapports enregistrés avec les listes de couples attribut-valeur (9),
- un premier système de mémorisation (15) mémorise les rapports enregistrés et mémorise et évalue les attributs, et
- un deuxième système de mémorisation (3) mémorise les informations sur l'utilisateur (A1, A2), notamment son nom, son identificateur et son rôle.

7. Procédé selon la revendication 6,
**caractérisé par le fait que** les attributs contiennent des informations sur un lieu d'intervention et sur une situation de travail et qu'au moins un système de localisation et de poursuite (2) avec au moins un capteur (1) détermine automatiquement le lieu d'intervention et un élément actuellement traité.

8. Procédé selon la revendication 6 ou 7,
**caractérisé par le fait qu'**un système dit Workflow Engine (5) exécute automatiquement un programme de travail actuel présent sous forme électronique et une étape de travail actuelle du programme de travail.

9. Procédé selon l'une des revendications 6 à 8,
**caractérisé par le fait qu'**un troisième système de mémorisation central (4) gère et combine des informations (6, 7, 8) fournies par le deuxième système de mémorisation (3), par le système de localisation et de poursuite (2) et par le Workflow Engine (5).

10. Procédé selon l'une des revendications 6 à 9,
**caractérisé par le fait que** les rapports mémorisés dans le premier système de mémorisation (15) sont évalués par des routines d'interrogation en fonction des attributs et à l'aide de propositions SQL, le premier système de mémorisation (15) étant conçu comme un système de mémorisation relationnel.
